# EUROPÄISCHE PATENTSCHRIFT

(11) **EP 1 054 548 B1**
(45) Veröffentlichungstag und Bekanntmachung des Hinweises auf die Patenterteilung: **25.10.2006**
(21) Anmeldenummer: 00110406.6
(22) Anmeldetag: 16.05.2000
(51) Int. Cl.: H04M 1/02

(54) **Telekommunikationsendgerät**
Telecommunication terminal
Terminal de télécommunication

(30) Priorität: 19.05.1999 DE 29909075 U
(43) Veröffentlichungstag der Anmeldung: 22.11.2000
(73) Patentinhaber: DeTeWe Systems GmbH, 10997 Berlin (DE)
(72) Erfinder: Stender, Ingrid, 10409 Berlin (DE)
(74) Vertreter: Fischer, Uwe

(56) Entgegenhaltungen:
- US-A- 4 578 739
- US-A- 5 077 832

## Beschreibung

Die Erfindung bezieht sich auf ein Telekommunikationsendgerät mit einem Gehäuse, das eine Ausnehmung zur Aufnahme eines optischen Anzeigemittels aufweist.

Es ist bekannt, in der Oberschale bzw. der Gehäusekappe eines Telekommunikationsendgerätes ein üblicherweise in einem Gehäuseausschnitt angeordnetes Fenster zur Aufnahme eines optischen Anzeigemittels vorzusehen und mit transparenten Teilen für Leuchtanzeigen und/oder Abdeckungen für Flüssigkristallanzeigen zu versehen. Zusätzlich werden auf dem Gehäuse des Telekommunikationsendgerätes Typenbezeichnungen und Herstellernamen sowie sonstige Logos aufgedruckt.

Aus der DE 43 34 692 C2 ist eine Abdeckung und Aufnahmevorrichtung für optische Anzeigemittel bekannt, die in eine Gehäusekappe von Telekommunjkationsendgeräten montiert ist, bei der die Abdeckung ein erhabenes Fenster und zylinderförmige Aufnahmen mit aufgesetzten quaderförmigen Liclitaustrittnöffnungen aufweist und aus transparentem Werkstoff desselben Materials wie das der Gehäusekappe bestehl. Zur Justierung und Befestigung der die optischen Anzeigemittel aufnehmenden Trägerplatte sind Zapfen und Pfosten vorgesehen und für den Durchgriff eines Steges der Gehäusekappe dient ein Schlitz zwischen Fenster und Aufnahmen.

Die US-Patentschrift US 5 077 832 beschreibt ein Funkgerät mit optionalem Display. Anstelle eines Displays kann auch eine einfache Abdeckung von innen in ein Funkgerätgehäuse eingeschraubt werden.

In der US-Patentschrift US 4 578 739 wird ein Telekommunikationsendgerät offenbar, das ein Gehäuse mit einer Ausnehmung umfasst, in die ein Anzeigeelement einsetzbar ist. Das Anzeigelement wird von einer Abdeckung geschützt, die formschlüssig in die Ausnehmung passt. Zum Fixieren der Abdeckung muss das Gehäuse an einer anderen Gehäuseseite geöffnet werden.

Aufgabe der vorliegenden Erfindung ist es, ein Telekommunikationsendgerät zu schaffen, das eine einfache und sichere Befestigung und geschützte Anordnung eines optischen Anzeigemittels im Gehäuse des Telekommunikationsendgerätes gewährleistet.

Diese Aufgabe wird erfindungsgemäß durch die Merkmale des Anspruches 1 gelöst.

Die erfindungsgemäße Lösung ermöglicht eine einfache und sichere Befestigung sowie geschützte Anordnung eines optischen Anzeigemittels im Gehäuse eines Telekommunikationgendgerätes.

Vorteilhafte Ausgestaltungen der Erfindung sind in Unteransprüchen angegeben.

Das Einsetzen und Herausnehmen der Abdeckung in die Ausnehmung bzw. aus der Ausnehmung des Gehäuses des Telekommunikationsendgerätes erfolgt über Formschlusselemente und Gegen-Formschlusselemente sowie vorzugsweise über zwei senkrecht zueinander verlautende Schiebebewegungen, durch die die Abdeckung mit dem Gehäuse bzw. der Gehäusekappe verbunden bzw. von dem Gehäuse bzw. der Gehäusekappe getrennt wird.

Dadurch wird ein unbeabsichtigtes Entfernen der Abdeckung von dem optischen Anzeigemittel verhindert und somit die Gefahr der Beschädigung des optischen Anzeigemittels minimiert.

Durch die zusätzliche Anordnung der Verriegelungsplatte, die gleichzeitig die Funktion eines Trägers für alphanumerische Zeichen und Symbole ("Logofenster") erfüllt, wird eine nach dem Einsetzen der Abdeckung in die Ausnehmung verbleibende freie Fläche ausgefüllt und damit die Abdeckung gegen ein unbeabsichtigtes Entfernen aus der Ausnehmung des Telekommunikationsendgerätes gesichert.

Die Verriegelungsplatte ist mittels Verriegelungselemente mit an der Ausnehmung angebrachten Gegen-Verriegelungselementen form- und/oder kraftschlüssig verbindbar, wobei die Verriegelungselemente und Gegen-Verriegelungselemente so ausgebildet und angeordnet sind, daß die Verriegelungsplatte mit einer im wesentlichen parallel zur ersten Schiebebewegung der Abdeckung verlaufenden Schiebebewegung mit dem Gehäuse des Telekommunikationsendgerätes verbindbar ist.

Dadurch, daß die Verriegelungsplatte mit einer im wesentlichen parallel zur ersten Schiebebewegung der Abdeckplatte verlaufende Schiebebewegung mit dem Gehäuse bzw. der Ausnehmung in der Gehäusekappe des Telekommunikationsendgerätes verbindbar ist, wird die Abdeckung wirksam verriegelt und damit die Sicherheit gegenüber einem unbeabsichtigten Entfernen der Abdeckung von dem optischen Anzeigemittel minimiert.

Die Verriegelungsplatte kombiniert die Verriegelungsfunktion mit einer auswechselbaren Anordnung eines Trägers für Schriftzeichen und/oder Symbole wie Herstellerangaben, Typbezeichnungen und dergleichen.

Alternativ kann die Verriegelungsplatte zumindest teilweise transparent ausgebildet sein und ein optisches Anzeigemittel zur Anzeige alphanumerischer Zeichen und/oder Symbole abdecken oder ein optisches Anzeigemittel zur Anzeige alphanumerischer Zeichen und/oder Symbole integrieren.

Eine vorteilhafte Ausgestaltung der erfindungsgemäßen Lösung ist dadurch gekennzeichnet, daß zumindest ein Teil der Formschlußelemente und/oder Gegen-Formschlußelemente sowie zumindest ein Teil der Verriegelungselemente der Ausnehmung und der Gegen-Verriegelungselemente der Verriegelungsplatte nach Art eines Bajonettverschlusses ausgebildet ist.

Weiterhin können die Ausnehmung und die Abdeckung rechteckförmig ausgebildet und die Formschlußelemente und Gegen-Formschlußelemente an zwei senkrecht zueinander stehenden Seiten der Ausnehmung und der Abdeckung angeordnet werden. Zusätzlich kann an einer dritten Seite der Ausnehmung und der zugehörigen dritten Seite der Abdeckung mindestens ein weiteres Formschlußelement angeordnet sein.

Um bei rechteckförmiger Ausbildung der Verriegelungsplatte und der Abdeckung die von der Abdeckung freigelassene Fläche der Ausnehmung hinreichend auszufüllen, ist die Summe der Länge der Seitenkante der Abdeckung und der Seitenkante der Verriegelungsplatte gleich oder angenähert gleich der Länge der Seitenkante der Ausnehmung und im montierten Zustand der Abdeckung und der Verriegelungsplatte liegen die Längsseiten der Verriegelungsplatte an der Ober- oder Unterkante der Ausnehmung und der Ober- oder Unterkante der Abdeckung an.

Alternativ kann die rechteckförmige Verriegelungsplatte über die der Ober- oder Unterkanterkante der Abdeckung benachbarte Fläche der Abdeckung geschoben werden.

Anhand eines in der Zeichnung dargestellten Ausführungsbeispieles soll der der Erfindung zugrunde liegende Gedanke näher erläutert werden. Es zeigen:
- Figur 1: eine Explosionsdarstellung der in eine Ausnehmung einer Gehäusekappe eines Telekommunikationsendgerätes eingesetzten Anzeige, Abdeckung und Verriegelungsplatte und
- Figur 2: verschiedene Ansichten der Verriegelungsplatte zum Arretieren der Abdeckung.

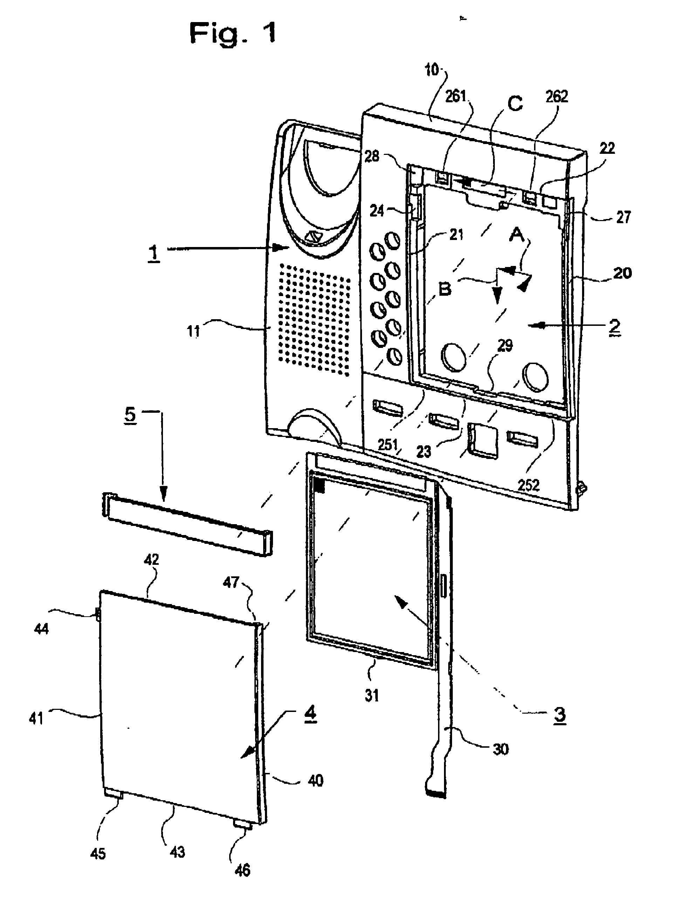

Figur 1 zeigt in perspektivischer Ansicht eine Gehäusekappe 1 bzw. ein Oberteil eines Telekommunikationsendgerätes, ein in die Gehäusekappe 1 einsetzbares optisches Anzeigemittel 3 in Form eines LCD-Displays sowie eine zumindest teilweise transparente Abdeckung 4 für das optische Anzeigemittel 3 und eine als, Logofenster ausgebildete Verriegelungsplatte 5. Die Zuordnung der einzelnen Teile und deren Verbindung mit der Ausnehmung 2 der Gehäusekappe 1 ist durch strichpunktierte Linien und Pfeile angegeben und soll im einzelnen nachstehend erläutert werden.

Die Gehäusekappe 1 weist eine Gehäuseschale 10 sowie eine Handapparatauflage 11 auf, die mit einer entsprechenden, nicht näher dargestellten Unterschale zur Bildung des Gehäuses für das Telekommunikationsendgerät verbindbar ist. Die Gehäuseschale 10 weist neben mehreren Öffnungen für Bedien- und Anzeigeelemente eine Ausnehmung 2 auf, in die das optische Anzeigemittel 3 in Form eines LCD-Displays eingesetzt und beispielsweise mittels einer Klebeverbindung mit der Gehäusekappe 1 verbunden wird. Zur Ansteuerung des optischen Anzeigemittels 3 dient ein Kabelbaum 30, der durch eine entsprechende Öffnung in der Gehäusekappe 1 geführt und mit einer elektronischen Schaltung des Telekommunikationsendgerätes verbunden wird.

Die Ausnehmung 2 ist in diesem Ausführungsbeispiel rechteckförmig gestaltet und weist eine an die Oberfläche der Gehäusekappe 1 angrenzende Oberkante 22 und gegenüberliegend eine Unterkante 23 sowie die Ober- und Unterkante verbindende Seitenkanten 20 und 21 auf, von denen die Seitenkante 20 abgestuft gegenüber der Seitenfläche der Gehäuseschale 10 ist. An der Unterkante 23 der Ausnehmung 2 ist eine Abstufung 29 zur Aufnahme und Zentrierung des optischen Anzeigemittels 3 über einen von dessen Unterseite abstehenden Steg 31 vorgesehen.

In den Randbereichen der Ausnehmung 2 sind mehrere Öffnungen 24, 251, 252, 261, 262, 27, 28 vorgesehen, die als Formschlußelemente zur Aufnahme von Gegen-Formschlußelementen der Abdeckung 4 bzw. als Verriegelungselemente zur Aufnahme von Gegen-Verriegelungselementen der Verriegelungsplatte 5 dienen.

Als erstes Formschlußelement ist eine an der Seitenkante 21 der Ausnehmung 2 angeordnete, hinterschnittene Öffnung 24 vorgesehen, in die der rechtwinklige Haken 44 der Abdekkung 4 eingesetzt wird. Zwei an der Unterkante 23 der Ausnehmung 2 vorgesehene Schlitze 251, 252 dienen zur Aufnahme von Stegen 45, 46, die von der Unterkante 43 der Abdeckung 4 rechtwinklig abstehen. Weiterhin weist die Abdeckung 4 eine senkrecht von der Oberfläche der Abdeckung 4 abgewinkelte Seitenkante 40, die im Bereich der Oberkante 42 der Abdeckung 4 ein im wesentlichen parallel zur Oberfläche der Abdeckung 4 verlaufendes hakenförmig umgebogenes Teil 47 aufweist.

Zur Verbindung der Abdeckung 4 mit der Gehäuseschale 10 der Gehäusekappe 1 wird die Abdeckung 4 vom äußeren (rechten) Seitenrand der Gehäuseschale 10 in die Ausnehmung 2 eingesetzt und in Richtung des Pfeiles A seitlich verschoben, bis die Seitenkante 40 der Abdeckung 4 an der abgestuften Seitenkante 20 der Ausnehmung 2 anliegt und der rechtwinklige Haken 44 der Abdeckung 4 in die hinterschnittene Öffnung 24 der Ausnehmung 2 eingesetzt ist. Gleichzeitig greift der hakenförmig umgebogene Teil 47 der Abdeckung 4 in die Nut 27 der Ausnehmung 2 ein.

Durch nachfolgendes Verschieben der Abdeckplatte 4 innerhalb der Ausnehmung 2 in Richtung des Pfeiles B, d.h. senkrecht zur Verschieberichtung A in Richtung auf die Unterkante 23 der Ausnehmung 2 greift der rechtwinklige Haken 44 an der Seitenkante 41 der Abdeckung 4 hinter die hinterschnittene Öffnung 24 an der Seitenkante 21 der Ausnehmung 2 und die von der Unterkante 43 der Abdeckung 4 abstehenden Stege 45, 46 greifen in die Schlitze 251, 252 an der Unterkante 23 der Ausnehmung 2 ein.

Dabei bewirkt der hinter die Hinterschneidung der hinterschnittenen Öffnung 24 greifende rechtwinklige Haken 44 eine formschlüssige Verbindung zwischen dem rechtwinkligen Haken 44 und der hinterschnittenen Öffnung 24 nach Art eines Bajonettverschlusses.

Dadurch ist die Abdeckung 4 an den Seitenkanten 20, 21 und an der Unterkante 23 mit der Ausnehmung 2 verbunden und infolge der Anordnung des rechtwinkligen Hakens 44 hinter der Hinterschneidung der hinterschnittenen Öffnung 24 ist ein Entfernen der Abdeckung 4 von der Gehäuseschale 10 durch seitliches Verschieben entgegen der Pfeilrichtung A nicht möglich. Nur ein kombiniertes Verschieben der Abdeckung 4 zunächst entgegen der Richtung des Pfeiles B und anschließend entgegen der Pfeilrichtung A löst die Abdekkung 4 aus der Ausnehmung 2 der Gehäuseschale 10 und gibt das optische Anzeigemittel 3 frei.

Infolge der Verschiebung der Abdeckung 4 in Richtung des Pfeiles B wird ein Raum oder Feld zwischen der Oberkante 42 der Abdeckung 4 und der Oberkante 22 der Ausnehmung 2 freigegeben, der bzw. das zur Aufnahme der Verriegelungsplatte 5 dient.

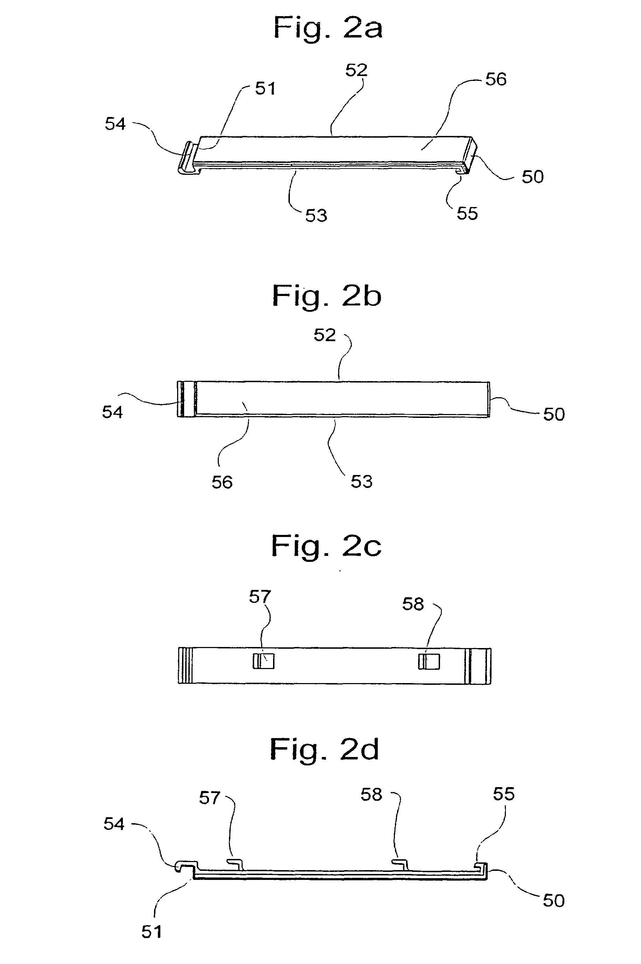

In den Figuren 2a bis 2d ist die Verriegelungsplatte 5 im Detail dargestellt, wobei Figur 2a eine perspektivische Ansicht, Figur 2b eine Vorderseitenansicht, Figur 2c eine Rückseitenansicht und Figur 2d eine Seitenansicht der Verriegelungsplatte 5 zeigt. Die Verriegelungsplatte 5 ist als rechteckförmige Platte mit einer Oberfläche 56 zur Aufnahme von Zeichen und/oder Symbolen sowie hakenförmigen Verriegelungselementen 54, 55 an den Schmalseiten 50, 51, die über die Längsseiten 52, 53 miteinander verbunden sind, ausgebildet. Auf der Rückseite der verriegelungsplatte 5 sind beabstandet zueinander zwei Haken 57, 58 angeordnet. die durch seitliches Verschieben der Verriegelungsplatte 5 mit Durchbrüchen 261, 262 an der Oberkante 22 der Ausnehmung 2 verrastbar sind.

Zum Einsetzen der Verriegelungsplatte 5 in das zwischen der Oberkante 42 der Abdeckung 4 und der Oberkante 22 der Ausnehmung 2 nach dem Einsetzen und Verschieben der Abdekkung 4 in die Pfeilrichtungen A und B freibleibende Feld wird die Verriegelungsplatte 5 mit ihrem hakenförmigen Verriegelungselement 54 in die hinterschnittene Öffnung 28 am oberen, an die Oberkante 22 der Ausnehmung 2 der Seitenkante 21 angrenzende hinterschnittene Öffnung 28 eingesetzt und anschließend das an die Schmalseite 50 grenzende Ende der Oberfläche 56 der Verriegelungsplatte 5 nach unten gedrückt und durch Verschieben der Verriegelungsplatte 5 in Richtung des Pfeiles C werden der an der Schmalseite 50 angeordnete, als Verriegelungselement ausgebildete Haken 55 in die Nut 27 an der Seitenkante 20 der Ausnehmung 2 sowie die Haken 57, 58 in die Durchbrüche 261, 262 eingeführt und mit diesen verrastet.

Da in dieser Stellung die Verriegelungsplatte 5 den Zwischenraum zwischen Oberkante 42 der Abdeckung 4 und der Oberkante 22 der Ausnehmung 2 ausfüllt, kann die Abdekkung 4 nicht entgegen der Richtung des Pfeiles B verschoben werden und ist damit innerhalb der Ausnehmung 2 mit der Gehäuseschale 10 bzw. der Gehäusekappe 1 verriegelt.

Durch die entsprechende farbliche Gestaltung zumindest der Oberfläche 56 der Verriegelungsplatte 5 können die in der Ausnehmung vorgesehenen Öffnungen sowie Teile des optischen Anzeigemittels 3 verdeckt werden, so daß sich insgesamt eine geschlossene Oberfläche und ein gefälliges Aussehen der Gehäusekappe 1 mit den darin angeordneten optischen Anzeigemitteln ergibt.

Durch entsprechendes Bedrucken der Verriegelungsplatte 5 mit Zeichen oder Symbolen können Herstellerzeichen, Geräte- oder Typenbezeichnungen oder Werbeaufdrucke auf der Gehäusekappe vorgesehen werden, wobei durch die Austauschbarkeit der Verriegelungsplatte 5 ein Wechsel der entsprechenden Darstellung im komplett montierten Gerät vorgenommen werden kann bzw. ein Telekommunikationsendgerät bestimmter Bauart mit unterschiedlichen Bezeichnungen in einfacher Weise versehen werden kann.

Die vorstehend beschriebene Erfindung beschränkt sich nicht auf das dargestellte Ausführungsbeispiel, insbesondere bezüglich der Ausgestaltung und Funktion der Verriegelungsplatte. So besteht die Möglichkeit, mehrere Verriegelungsplatten zum Fixieren und Verriegeln der Abdeckung vorzusehen, beispielsweise in dem an die Ober- und Unterkante der Ausnehmung angrenzenden Bereich.

Weiterhin kann die Verriegelungsplatte selbst zumindest teilweise transparent ausgebildet sein und ein LCD- oder LED-Display abdecken, mit dem ein Logo oder eine sonstige alphanumerische Zeichen- oder Symboldarstellung angezeigt wird, so daß zur Änderung des Logos nur eine entsprechende Ansteuerung des LCD/LBD-Displays erforderlich ist. Auch kann das LCD/LED-Display als gegebenenfalls abgetrennter Bereich des optischen Anzeigemittels ausgebildet sein.

Eine weitere Anwendungmöglichkeit und Ausgestaltung der Verriegelungsplatte kann darin bestehen, daß ein LCD/LED-Display in die Verriegelungsplatte integriert ist und beispielsweise eines der Verriegelungselemente zur Kontaktierung mit einem entsprechenden Gegenkontakt im Bereich der Ausnehmung dient, um die Ansteuersignale von einer Elektronik des Telekommunikationsendgerätes zum LCD/LED-Display zu übertragen.

Alternativ zum Ausfüllen eines freien Raumes der Ausnehmung zwischen der Oberkante der Ausnehmung und der Oberkante der Abdeckung nach deren Einsetzen in die Ausnehmung kann zur zusätzlichen Verriegelung der Abdeckung 4 und gleichzeitig zum Anbringen eines Trägers für alphanumerische Zeichen oder Symbole an der Gehäusekappe 1 bzw. Gehäuseschale 10 die Verriegelungsplatte 5 an der Oberkante 22 der Ausnehmung 2 auf die Abdeckung 4 aufgesetzt und seitlich in Richtung des Pfeiles C entlang der Oberkante 22 der Ausnehmung 2 verschoben werden bis die an den Schmalseiten 51, 52 der Verriegelungsplatte 5 angeordneten Verriegelungselemente 54, 55 mit den entsprechenden Gegen-Verriegelungselementen 27, 28 der Ausnehmung 2 verbunden sind.

Die Verriegelungselemente 54, 55 der Verriegelungsplatte 5 sind hakenförmig ausgebildet, d.h. bestehen aus mehrfach rechtwinklig von der Oberfläche 56 der Verriegelungsplatte 5 abgewinkelten Stegen, wobei das an der Schmalseite 50 der Verriegelungsplatte 5 angeordnete Verriegelungselement 55 in den Schlitz 27 an der Seitenkante 20 der Ausnehmung 2 eingreift, während das Verriegelungselement 54 an der Schmalseite 51 der Verriegelungsplatte 5 in die hinterschnittene Öffnung 28 im Bereich der Henkel zwischen der Oberkante 22 und der Seitenkante 21 der Ausnehmung 2 eingreift.

Bei der seitlichen Schiebebewegung der Verriegelungsplatte 5 in Richtung des Pfeiles C liegt die Längsseite 52 der Verriegelungsplatte 5 an der Oberkante 22 der Ausnehmung 2 an oder überragt die Oberkante 22. Die andere Längsseite 53 der Verriegelungsplatte 5 begrenzt die Oberfläche 56 der Verriegelungsplatte 5 und damit das Trägerfeld für alphanumerische Zeichnungssymbole.

## Patentansprüche

1. Telekommunikationsendgerät mit
- einem Gehäuse, das eine Ausnehmung (2) zur Aufnahme eines optischen Anzeigemittels (3) aufweist, und
- einer Abdeckung (4), die in die Ausnehmung (2) einsetzbar ist und zumindest im Bereich des optischen Anzeigemittels (3) transparent isL,
- wobei an mindestens zwei unterschiedlichen Stellen der Ausnehmung (2) Formschlusselemente (24, 251, 252, 261, 262, 27) angeordnet sind, die bei Einsetzen der Abdeckung (4) in die Ausnehmung (2) mit Gegen-Formschlusselementen (44 bis 47) der Abdeckung (4) verbindbar sind,
**dadurch gekennzeichnet, dass**
- die Formschlusselemente (24, 251, 252, 261, 262, 27) mit den Gegcn-Formschlusselementen (44 bis 47)durch eine Schiebebewegung der Abdeckung (4) verbindbar sind,
- die Ausnehmung (2) größer als die Abdeckung (4) ist, so dass nach dem Einsetzen der Abdeckung (4) in die Ausnehmung (2) eine freie Fläche in der Ausnehmung (2) verbleibt,
- mindestens eine Verriegelungsplatte (5) in die freie Fläche einsetzbar ist und
- die mindestens eine Verriegelungsplatte (5) nach Einsetzen in die freie Fläche die Abdeckung (4) in der Ausnehmung (2) des Gehäuses (1) festlegt.

2. Telekommunikationsendgerät nach Anspruch 1, **dadurch gekennzeichnet, dass** die Formschlusselemente (24 bis 27) und die Gegen-Formschlusselemente (44 bis 47) so ausgebildet und angeordnet sind, dass die Abdeckung (4) mit zwei nacheinander und senkrecht zueinander verlaufenden Schiebebewegungen in die Ausnehmung (2) einsetzbar und mit dem Gehäuse (1) verbindbar ist.

3. Telekommunikationsendgerät nach Anspruch 2, **dadurch gekennzeichnet, dass** die Abdeckung (4) eine Oberfläche aufweist, die nach dem Einsetzen der Abdeckung (4) in die Ausnehmung (2) der Ausnehmung (2) abgewandt ist, und dass die beiden Schiebebewegungen parallel zu der Oberfläche erfolgen.

4. Telekommunikationsendgerät nach einem der vorangehenden Ansprüche, **dadurch gekennzeichnet, daß** die Verriegelungsplatte (5) mittels Verriegelungselementen (54, 55; 57, 58) mit an der Ausnehmung (2) angebrachten Gegen-Verriegelungselementen (27, 28; 261, 262) form- und/oder kraftschlüssig verbindbar ist.

5. Telekommunikationsendgerät nach Anspruch 4, **dadurch gekennzeichnet, daß** die Verriegelungselemente (54, 55; 57, 58) und Gegen-Verriegelungselemente (27, 28; 261, 262) so ausgebildet und angeordnet sind, daß die Verriegelungsplatte (5) mit einer im wesentlichen parallel zur ersten Schiebebewegung der Abdeckung (4) verlaufenden Schiebebewegung mit dem Gehäuse (1) verbindbar ist.

6. Telekommunikationsendgerät nach einem der vorangehenden Ansprüche, **dadurch gekennzeichnet, daß** die Verriegelungsplatte (5) ein Schriftfeld (56) zur Aufnahme alphanumerischer Zeichen und/oder Symbole aufweist.

7. Telekommunikationsendgerät nach einem der vorangehenden Ansprüche, **dadurch gekennzeichnet, daß** die Verriegelungsplatte (5) zumindest teilweise transparent ausgebildet ist und ein optisches Anzeigemittel (3) zur Anzeige alphanumerischer Zeichen und/oder Symbole abdeckt.

8. Telekommunikationsendgerät nach einem der vorangehenden Ansprüche, **dadurch gekennzeichnet, daß** in die Verriegelungsplatte (5) ein optisches Anzeigemittel zur Anzeige alphanumerischer Zeichen und/oder Symbole integriert ist.

9. Telekommunikationsendgerät nach einem der vorangehenden Ansprüche, **dadurch gekennzeichnet, daß** zumindest ein Teil der Formschlußelemente und/oder Gegen-Formschlußelemente nach Art eines Bajonettverschlusses ausgebildet ist.

10. Telekommunikationsendgerät nach mindestens einem der vorangehenden Ansprüche**, dadurch gekennzeichnet, daß** das optische Anzeigemittel (3) in die Ausnehmung (2) eingeklebt ist.

11. Telekommunikationsendgerät nach mindestens einem der vorangehenden Ansprüche, **dadurch gekennzeichnet, daß** die Ausnehmung (2) und die Abdeckung (4) rechteckförmig ausgebildet und die Formschlußelemente (24 bis 27) und Gegen-Formschlußelemente (44 bis 47) an zwei senkrecht zueinander stehenden Seiten (21, 23; 41, 43) der Ausnehmung (2) und der Abdeckung (4) angeordnet sind.

12. Telekommunikationsendgerät nach Anspruch 11, **dadurch gekennzeichnet, daß** an einer dritten Seite (20) der Ausnehmung (2) und einer zugehörigen dritten Seite (40) der Abdeckung (4) mindestens ein weiteres Formschlußelement (27, 47) angeordnet ist.

13. Telekommunikationsendgerät nach mindestens einem der vorangehenden Ansprüche, **dadurch gekennzeichnet, daß** ein erstes Formschlußelement (24) aus einer hinterschnittenen Öffnung in einer ersten Seitenkante (21) der Ausnehmung (2) besteht, die mit einem rechtwinkliggen Haken (44) als erstem Gegen-Pormachlußelement an einer ersten Seitenkante (41) der Abdeckung (4) derart korrespondiert, daß der rechtwinklige Haken (44) in die hinterschnittene Öffnung (24) beim Verschieben der Abdeckung (4) in eine erste Richtung (A) einsetzbar und durch Verschieben der Abdeckung (4) in eine zur ersten Schieberichtung (A) senkrechte zweite Schieberichtung (B) der rechtwinklige Haken (44) hinter die Hinterschneidung der hinterschnittenen Öffnung (24) an einer Seitenkante (21) der Ausnehmung (2) greift, und daß zweite Formschlußelemente aus Schlitzen (251, 252, 261, 262) in der Ober- oder Unterkante (22, 23) der Ausnehmung (2) bestehen, die mit von der Ober- oder Unterkante (42, 43) der Abdeckung (4) abstehenden Stegen (45, 46) als zweite Gegen-Formschlußelemente korrespondieren.

14. Telekommunikationsendgerät nach Anspruch 13, **dadurch** gekennzeichet, daß die der ersten Seitenkante (21) gegenüberliegende Seitenkante (20) der Ausnehmung (2) als Abstufung einer Seitenkante (10) des Gehäuses (1) des Telekommunikationsendgerätes ausgebildet ist und daß an der gegenüberliegenden Seitenkante (20) der Ausnehmung (2) eine längsgerichtete Nut (27) als drittes Formschlußelement angeordnet ist, in die ein hakenförmig umgebogener Teil (47) der Seitenkante (40) der Abdeckung (4) als drittes Gegen-Formschlußelement eingreift, wobei der hakenförmig umgebogene Teil (47) der Abdeckung (4) in die Nut (27) der Ausnehmung (2) greift, wenn die Abdeckung (4) entlang der zweiten Verschieberichtung (B) verschoben wird.

15. Telekommunikationsendgerät nach mindestens einem der vorangehenden Ansprüche, **dadurch gekennzeichnet, daß** zumindest ein Teil der Verriegelungselemente (27, 28) der Ausnehmung (2) und der Gegen-Verriegelungselemente (54, 55) der Verriegelungsplatte (5) nach Art eines Bajonettverschlusses miteinander verbindbar sind.

16. Telekommunikationsendgerät nach mindestens einem der vorangehenden Ansprüche, **dadurch gekennzeichnet, daß** die Verriegelungsplatte (5) und die Abdeckung (4) rechteckförmig ausgebildet sind, daß die Summe der Länge der Seitenkanten (40, 41) der Abdeckung (4) und der Seitenkanten (50, 51) der Verriegelungsplatte (5) gleich der Länge der Seitenkanten (20, 21) der Ausnehmung (2) ist und daß im montierten Zustand Längsseiten (52, 53) der verrfegelungsplatte (5) an der Ober- oder Unterkante (22, 23) der Ausnehmung (2) und der Ober- oder Unterkante (42, 43) der Abdeckung (4) anliegen.

17. Telekommunikationsendgerät nach mindestens einem der vorangehenden Ansprüche 1 bis 15, **dadurch gekennzeichnet, daß** die Verriegelungsplatte (5) rechteckförmig ausgebildet ist und über die der Ober- oder Unterkanterkante (42, 43) der Abdeckung (4) benachbarte Fläche der Abdeckung (4) schiebbar ist.

18. Telekommunikationsendgerät nach mindestens einem der vorangehenden Ansprüche, **dadurch gekennzeichnet, daß** die Verriegelungselemente (54, 55) der Verriegelungsplatte (5) an deren Schmalseiten (50, 51) angeordnet und hakenförmig ausgebildet sind, und daß die Gegen-Verriegelungselemente der Ausnehmung (2) aus einer hinterschnittenen Öffnung (28) und aus der Nut (27) an der Seitenkante (20) der Ausnehmung (2) bestehen.

## Claims

1. Telecommunications terminal comprising
- a housing which has a recess (2) for accommodating a visual display means (3), and
- a cover (4) which can be inserted into the recess (2) and is transparent at least in the region of the visual display means (3),
- with interlocking elements (24, 251, 252, 261, 262, 27) being arranged at at least two different points in the recess (2) and it being possible to connect the said interlocking elements Lo mating interlocking elements (44 to 47) of the cover (4) when Lhe cover (4) is inserted into the recess (2),
**characterized in that**
- the interlocking elements (24, 251, 252, 261, 262, 27) can be connected to the mating interlocking elements (44 to 47) by means of the cover (4) performing a sliding movement,
- the recess (2) is larger than the cover (4), so that a free area remains in the recess (2) after the cover (4) is inserted into the recess (2),
- at least one locking plate (5) can be inserted into the free area, and
- the at least one locking plate (5) fixes the cover (4) in the recess (2) of the housing (1) after the said locking plate is inserted into the free area.

2. Telecommunications terminal according to Claim 1, **characterized in that** the interlocking elements (24 to 27) and the mating interlocking elements (44 to 47) are formed and arranged such that the cover (4) can be inserted into the recess (2) and connected to the housing (1) by means of two sliding movements which are executed in succession and perpendicular to one another.

3. Telecommunications terminal according to Claim 2, **characterized in that** the cover (4) has a surface which faces away from the recess (2) after the cover (4) is inserted into the recess (2), and **in that** the two sliding movements are performed parallel to the surface.

4. Telecommunications terminal according to any of the preceding claims, **characterized in that** the locking plate (5) can be connected to mating locking elements (27, 28; 261, 262), which are provided in the recess (2), by means of locking elements (54, 55; 57, 58) in an interlocking and/or force-fitting manner.

5. Telecommunications terminal according to Claim 4, **characterized in that** the locking elements (54, 55; 57, 58) and mating locking elements (27, 28; 261, 262) are formed and arranged such that the locking plate (5) can be connected to the housing (1) by means of a sliding movement which is executed substantially parallel to the first sliding movement of the cover (4).

6. Telecommunications terminal according to any of the preceding claims, **characterized in that** the locking plate (5) has an inscription area (56) for receiving alphanumeric signs and/or symbols.

7. Telecommunications terminal according to any of the preceding claims, **characterized in that** the locking plate (5) is at least partially transparent and covers a visual display means (3) for displaying alphanumeric signs and/or symbols.

8. Telecommunications terminal according to any of the preceding claims, **characterized in that** a visual display means for displaying alphanumeric signs and/or symbols is integrated in the locking plate (5).

9. Telecommunications terminal according Lo any of the preceding claims, **characterized in that** at least some of the interlocking elements and/or mating interlocking elements are formed in the manner of a bayonet fitting.

10. Telecommunications terminal according to any of the preceding claims, **characterized in that** the visual display means (3) is adhesively bonded in the recess (2).

11. Telecommunications terminal according to any of the preceding claims, **characterized in that** the recess (2) and the cover (4) are rectangular, and the interlocking elements (24 to 27) and mating interlocking elements (44 to 47) are arranged on two perpendicular sides (21, 23; 41, 43) of the recess (2) and the cover (4).

12. Telecommunications terminal according to Claim 11, **characterized in that** at least one further interlocking element (27, 47) is arranged on a third side (20) of the recess (2) and an associated third side (40) of the cover (4).

13. Telecommunications terminal according to any of the preceding claims, **characterized in that** a first interlocking element (24) comprises an undercut opening in a first side edge (21) of the recess (2), said opening corresponding with a right-angled hook (44) as the first mating interlocking element on a first side edge (41) of the cover (4) in such a way that the right-angled hook (44) can be inserted into the undercut opening (24) when the cover (4) moves in a first direction (A), and the right-angled hook (44) engages behind the undercut in the undercut opening (24) on a side edge (21) of the recess (2) by the cover (4) moving in a second sliding direction (B) which is perpendicular to the first sliding direction (A), and **in that** the second interlocking elements comprise slots (251, 252, 261, 262) in the upper or lower edge (22, 23) of the recess (2), said interlocking elements corresponding with webs (45, 46) which project from the upper or lower edge (42, 43) of the cover (4) as second mating interlocking elements.

14. Telecommunications terminal according to Claim 13, **characterized in that** the side edge (20), which is opposite the first side edge (21), of the recess (2) is in the form of a step of a side edge (10) of the housing (1) of the telecommunications terminal, and **in that** a longitudinally directed groove (27) is arranged as a third interlocking element on Lhe opposite side edge (20) of the recess (2), into which groove a hook-like bent part (47) of the side edge (40) of the cover (4) engages as a third mating interlocking element, with the hook-like bent part (47) of the cover (4) engaging in the groove (27) in the recess (2) when the cover (4) is moved along the second movement direction (8).

15. Telecommunications terminal according to any of the preceding claims, **characterized in that** at least some of the locking elements (27, 28) of the recess (2) and the mating locking elements (54, 55) of the locking plate (5) can be connected to one another in the manner of a bayonet fitting.

16. Telecommunications terminal according to any of the preceding claims, **characterized in that** the locking plate (5) and the cover (4) are rectangular, **in that** the sum of the length of the side edges (40, 41) of the cover (4) and the side edges (50, 51) of the locking plate (5) is equal to the length of the side edges (20, 21) of the recess (2), and **in that** longitudinal sides (52, 53) of the locking plate (5) rest against the upper or lower edge (22, 23) of the recess (2) and the upper or lower edge (42, 43) of the cover (4) in the mounted sLate.

17. Telecommunications terminal according to any of the preceding Claims 1 to 15, **characterized in that** the locking plate (5) is rectangular and can be slid over the area of the cover (4) which is adjacent to the upper or lower edge (42, 43) of the cover (4).

18. Telecommunications terminal according to any of the preceding claims, **characterized in that** the locking elements (54, 55) of the locking plate (5) are arranged On its narrow sides (50, 51) and formed in a hook-like manner, and **in that** the mating locking elements of the recess (2) comprise an undercut opening (28) and the groove (27) on the side edge (20) of the recess (2).

## Revendications

1. Terminal de télécommunication avec :
- un boîtier comportant un évidement (2) pour loger un élément d'affichage optique (3), eL
- un couvercle (4) que l'on peut insérer dans l'évidement (2) et qui est transparent au moins dans la zone de l'élément d'affichage optique (3),
- des éléments à complémentarité de forme (24, 251, 252, 261, 262, 27) qui lors de l'insertion du couvercle (4) dans l'évidement (2) peuvent être assemblés avec des contre-éléments à complémentarité de forme (44 à 47) du couvercle (4) étant disposés sur au moins deux endroits différents de l'évidement (2),
**caractérisé en ce que**
- les éléments à complémentarité de forme (24, 251, 252, 261, 262, 27) peuvent être assemblés avec les contre-éléments à complémentarité de forme (44 à 47) par un mouvement de translation du couvercle (4),
- l'évidement (2) est plus grand que le couvercle (4) pour qu'après l'insertion du couvercle (4) dans l'évidement (2) il reste une surface libre dans l'évidement (2),
- au moins une plaque de verrouillage (5) peut s'insérer dans la surface libre et
- après avoir été insérée dans la surface libre, la au moins une plaque de verrouillage (5) fixe le couvercle (4) dans l'évidement (2) du boîtier (1).

2. Terminal de télécommunication selon la revendication 1, **caractérisé en ce que** les éléments à complémentarité de forme (24 à 27) et les contre-éléments à complémentarité de forme (44 à 47) sont conçus et disposés de façon telle que le couvercle (4) puisse être inséré dans l'évidement (2) et assemblé avec le boîtier (1) par deux mouvements de translation successifs et mutuellement perpendiculaires.

3. Terminal de télécommunication selon la revendication 2, **caractérisé en ce que** le couvercle (4) comporte une surface qui après insertion du couvercle (4) dans l'évidement (2) est opposée à l'évidement (2) et **en ce que** les deux mouvements de translation sont effectués à la parallèle de la surface.

4. Terminal de télécommunication selon l'une quelconque des revendications précédentes, **caractérisé en ce que** la plaque de verrouillage (5) peut être assemblée par complémentarité de forme et/ou de force, au moyen d'éléments de verrouillage (54, 55 ; 57, 58) avec des contre-éléments de verrouillage (27, 28 ; 261, 262) montés sur l'évidement (2).

5. Terminal de télécommunication selon la revendication 4, **caractérisé en ce que** les éléments de verrouillage (54, 55 ; 57, 58) et les contre-éléments de verrouillage (27, 28 ; 261, 262) sont conçus et disposés de façon telle que la plaque de verrouillage (5) puisse être assemblée avec le boîtier (1) par un mouvement de translation substantiellement parallèle au premier mouvement de translation du couvercle (4).

6. Terminal de télécommunication selon l'une quelconque des revendications précédentes, **caractérisé en ce que** la plaque de verrouillage (5) comporte une zone d'inscription (56) pour recevoir des caractères alphanumériques et/ou des symboles.

7. Terminal de télécommunication selon l'une quelconque des revendications précédentes, **caractérisé en ce que** la plaque de verrouillage (5) est conçue de façon au moins partiellement transparente et recouvre un élément d'affichage optique (3) pour l'affichage de caractères alphanumériques et/ou de symboles.

8. Terminal de télécommunication selon l'une quelconque des revendications précédentes, **caractérisé en ce qu'**un élément d'affichage optique pour l'affichage de caractères alphanumériques et/ou de symboles est intégré dans la plaque de verrouillage (5).

9. Terminal de télécommunication selon l'une quelconque des revendications précédentes, **caractérisé en ce qu'**au moins une partie des éléments à complémentarité de forme et/ou des contre-éléments à complémentarité de forme est conçue à la manière d'un emboîtement à baïonnette.

10. Terminal de télécommunication selon au moins l'une quelconque des revendications précédentes, **caractérisé en ce que** l'élément d'affichage optique (3) est collé dans l'évidement (2).

11. Terminal de télécommunication selon au moins l'une quelconque des revendications précédentes, **caractérisé en ce que** l'évidement (2) et le couvercle (4) sont conçus sous forme rectangulaire et **en ce que** les éléments à complémentarité de forme (24 à 27) et les contre-éiémants à complémentarité de forme (44 à 47) sont disposés sur deux côtés (21, 23 ; 41, 43) mutuellement perpendiculaires de l'évidement (2) et du couvercle (4).

12. Terminal de télécommunication selon la revendication 11, **caractérisé en ce qu'**au moins un élément à complémentarité de forme supplémentaire (27, 4/) est disposé sur un troisième côté (20) de l'évidement (2) et sur un troisième côté correspondant (40) du couvercle (4).

13. Terminal de télécommunication selon au moins l'une quelconque des revendications précèdentes, **caractérisé en ce qu'**un premier élément à complémentarité de forme (24) consiste en une ouverture à contre-dépouille dans une première arête latérale (21) de l'évidement (2), qui par un crochet (44) à angle droit en tant que premier contre-élément à complémentarité de forme sur une première arête latérale (41) du couvercle (4) correspond de façon telle que le crochet (44) à angle droit soit insérable dans l'ouverture à contre-dépouille (24) lors de la translation du couvercle (4) dans une première direction (A) et que par translation du couvercle (4) dans une deuxième direction de translation (B) perpendiculaire à la première direction de translation (A), le crochet (44) à angle droit s'engage derrière la contre-dépouille de l'ouverture à contre-dépouille (24) sur une arête latérale (21) de l'évidement (2) et **en ce que** des deuxièmes éléments à complémentarité de forme consistent en des encoches (251, 252, 261, 262) dans l'arête supérieure ou inférieure (22, 23) de l'évidement (2) qui correspondent avec des nervures (45, 46) saillant de l'arête supérieure ou inférieure (42, 43) du couvercle (4) en tant que deuxièmes contre-éléments à complémentarité de forme.

14. Terminal de télécommunication selon la revendication 13, **caractérisé en ce que** l'arête latérale (20) opposée à la première arête latérale (21) de l'évidement (2) est conçue en tant qu'échelonnement d'une arête latérale (10) du boîtier (1) du terminal de télécommunication et **en ce qu'**une rainure longitudinale (27) dans laquelle une partie recourbée (47) de l'arête latérale (40) du couvercle (4) s'engage en tant que troisième contre-élément à complémentarité de forme est disposée sur l'arête latérale opposée (20) de l'évidement (2), en tant que troisième élément à complémentarité de forme, la partie (47) recourbée en forme de crochet du couvercle (4) s'engageant dans la rainure (27) de l'évidement (2), lorsqu'on déplace en translation le couvercle (4) le long de la deuxième direction de translation (B).

15. Terminal de télécommunication selon au moins l'une quelconque des revendications précédentes, **caractérisé en ce qu'**au moins une partie des éléments de verrouillage (27, 28) de l'évidement (2) et des contre-éléments de verrouillage (54, 55) de la plaque de verrouillage (5) peut être assemblée mutuellement à la façon d'un emboîtement à baïonnette.

16. Terminal de télécommunication selon au moins l'une quelconque des revendications précédentes, **caractérisé en ce que** la plaque de verrouillage (5) et le couvercle (4) sont conçus sous forme rectangulaire, **en ce que** la somme de la longueur des arêtes latérales (40, 41) du couvercle (4) et des arêtes latérales (50, 51) de la plaque de verrouillage (5) est identique à la longueur des arêtes latérales (20, 21) de l'évidement (2) et **en ce qu'**en position montée, des côtés longitudinaux (52, 53) de la plaque de verrouillage (5) s'appuient sur l'arête supérieure ou inférieure (22, 23) de l'évidement (2) et sur l'arête supérieure ou inférieure (42, 43) du couvercle (4).

17. Terminal de télécommunication selon au moins l'une quelconque des revendications 1 à 15, **caractérisé en ce que** la plaque de verrouillage (5) est conçue sous forme rectangulaire et **en ce qu'**elle peut être poussée par-dessus des surfaces du couvercle (4) voisines de l'arête supérieure ou inférieure (42, 43) du couvercle (4).

18. Terminal de télécommunication selon au moins l'une quelconque des revendications précédentes, **caractérisé en ce** les éléments de verrouillage (54, 55) de la plaque de verrouillage (5) sont disposés sur ses côtés étroits (50, 51) et conçus en forme de crochets et en ce que les contre-éléments de verrouillage de l'évidement (2) consistent en une ouverture à contre-dépouille (28) et en une rainure (27) sur l'arête latérale (20) de l'évidement (2).
